# EUROPÄISCHE PATENTSCHRIFT

(11) **EP 0 668 487 B1**
(45) Veröffentlichungstag und Bekanntmachung des Hinweises auf die Patenterteilung: **25.10.2000**
(21) Anmeldenummer: 94102381.4
(22) Anmeldetag: 17.02.1994
(51) Int. Cl.: G01F 7/00

(54) **Verbundwasserzähler**
Compound water meter
Compteur d'eau composé

(43) Veröffentlichungstag der Anmeldung: 23.08.1995
(73) Patentinhaber: H. MEINECKE AG, D-30880 Laatzen (DE)
(72) Erfinder: Dewald, Hans-Peter, D-68259 Mannheim (DE)
(74) Vertreter: Patentanwälte Möll und Bitterich

(56) Entgegenhaltungen:
- CH-A- 361 139
- DE-A- 3 515 565
- DE-A- 3 929 381
- FR-A- 2 546 295

## Beschreibung

Die Erfindung betrifft Verbundwasserzähler mit einem Hauptzähler für die Messung der größeren Durchflüsse, einem dahinter angeordneten, selbsttätig wirksamen Umschaltventil, einem in einer Nebenleitung oder einem Nebenkanal sitzenden Nebenzähler für die Messung der kleineren Durchflüsse und einem Ausgang von Nebenleitung bzw. Nebenkanal, der seitlich in das Gehäuse des Umschaltventils einmündet, gemäß dem Oberbegriff des Anspruchs 1.

Verbundwasserzähler und zum Umschalten zwischen Hauptzähler und Nebenzähler dienende, selbsttätig wirksame Umschaltventile waren schon im 19. Jahrhundert in Gebrauch. Gemeinsames Konstruktionsprinzip ist ein Ventilteller, dessen Fläche größer ist als die Fläche des Hauptstrom-Dichtsitzes, so daß der Wasser-Differenzdruck bei gesperrtem Durchgang auf eine kleinere, bei geöffnetem Durchgang auf eine größere Fläche wirkt, um eine schlagartige Öffnung des Ventiltellers zu erreichen. Zum Ausgleich des Wasser-Differenzdrucks bei geschlossenem Ventilteller werden geeignete Mittel verwendet, beispielsweise Schwerkraft, Federkraft usw. Gewünscht wird, daß der Ventilteller jeweils möglichst schlagartig öffnet oder schließt, damit keine Meßfehler auftreten.

Als Beispiel sei verwiesen auf die DE-C-92 631. Bei dieser sitzt der Ventilteller in einem hinter dem Ventilsitz angeordneten Führungszylinder, wobei der Ringspalt zwischen dem Rand des Ventiltellers und der Wand des Zylinders möglichst eng gehalten wird. Diese Konstruktion kann jedoch das gewünschte schlagartige Anheben des Ventiltellers nicht bewirken, weil schon nach dem geringsten Abheben des Ventiltellers von seinem Dichtsitz über den unvermeidlichen Ringspalt ein den Differenzdruck mindernder Druckausgleich entsteht, was bei gleichbleibendem Durchfluß zu einem Stillstand des Ventiltellers im Bereich des Zylinders und somit zu einem zu geringen Durchfluß durch den Hauptzähler führt. Daher treten bei dieser Konstruktion größere Meßfehler auf. Dies gilt sowohl beim öffnen als auch beim Wieder-Schließen des Ventils.

Die 1960 veröffentlichte DE-C-10 77 884 offenbart ein verbessertes Umschaltventil für Verbundzähler. Dieses arbeitet mit einer Schwenkklappe, die mit einem überstehenden Rand ausgerüstet ist, der in einen Ringraum eintaucht, in den der vom Nebenzähler kommende Nebenstrom eingeleitet wird. Die Klappe wird von einem Gewicht in Schließstellung gehalten, welches so angeordnet ist, daß beim Öffnen der Klappe eine Verringerung der Schließkraft erreicht wird. Diese Schließkraftveränderung in Verbindung mit der schiebenden Wirkung des Nebenstroms auf den Klappenrand führt zu einer Beschleunigung des Öffnungsvorgangs, jedoch zu einer Verzögerung des Schließvorgangs, insgesamt jedoch zu einer Verringerung der Meßfehler während des Umschaltens. Allerdings können diese Umschaltventile nur in einer definierten Position montiert werden. Auch sind sie extrem groß und schwer; für die heute bevorzugte sogenannte Kurzbaulänge sind sie völlig ungeeignet.

Etwa 1980 wurden dann Umschaltventile für Verbundwasserzähler gemäß DE-C-30 34 056 konstruiert, deren Ventilteller sich linear gegen eine Feder verschiebt, die einen doppelten Dichtsitz aufweisen und die für ihre Funktion eine feine Steuerbohrung benötigen. Auch hier besitzt der Ventilteller einen erweiterten Rand, der in einen Ringraum ragt, in den der Nebenstrom einmündet. Dadurch erzeugt der Nebenstrom einen Schub in Öffnungsrichtung, der durch eine entsprechend verstärkte Schließfeder kompensiert werden muß. Auch diese Umschaltventile verursachen einen wenn auch geringen Meßfehler im Umschaltbereich. Schmutz, Rost oder Kalk im Wasser können die einwandfreie Funktion des Umschaltventils beeinträchtigen und die Meßfehler vergrößern.

Alle Umschaltventile mit einer Schließfeder haben ein gemeinsames Problem: Die Rückstellkraft der Feder steigt mit zunehmendem Öffnungsweg des Ventiltellers linear an. Ideal wäre jedoch eine konstante oder gar abnehmende Rückstellkraft, wie sie bei den oben erwähnten gewichtsbelasteten Klappenventilen darstellbar ist. Federbelastete Umschaltventile müssen daher mit einer möglichst langen Feder ausgerüstet werden, um den Kraftanstieg gering zu halten, was jedoch der heute bevorzugten sogenannten Kurzbaulänge zuwiderläuft.

In der DE-A-39 29 381 ist ein Umschaltventil für Verbundwasserzähler offenbart, welches einen Dauermagneten verwendet, um in der Schließstellung des Ventiltellers eine zusätzliche Haltekraft auf diesen auszuüben. Dadurch kann die Rückstellfeder entsprechend schwächer und/oder kürzer gemacht werden. Auch besitzt dieses Umschaltventil eine Lippendichtung, die bei Beginn des Öffnungshubs des Ventiltellers zunächst noch am Dichtsitz "kleben" bleibt und erst abreißt, wenn die Haltewirkung des Dauermagneten überwunden ist. Die Verwendung von Dauermagneten in Umschaltventilen wird jedoch von den meisten Anwendern abgelehnt, da befürchtet wird, daß im Wasser schwebende Rostpartikel angezogen werden und die Funktion stören. Auch hat sich gezeigt, daß die Lippendichtung in Verbindung mit dem überstehenden Rand des Ventiltellers einen zusätzlichen Schub in Öffnungsrichtung erzeugt, der durch eine verstärkte Magnet- und/oder Federkraft kompensiert werden muß.

Weitere Umschaltventile sind aus DE 35 15 565 und FR 2 546 295 bekannt. Diese besitzen zusätzlich zum Hauptstrom-Dichtsitz einem weiteren nicht direckt am zentralen Gleitbolzen anliegenden Dichtsitz. Die Zone stromaufwarts des Einlaßereichs des Nebenstroms ist konisch ausgeführt.

Der vorliegenden Erfindung liegt die Aufgabe zugrunde, einen Verbundzähler der eingangs genannten Art anzugeben, der so konstruiert ist, daß alle den Ventilteller in Öffnungsrichtung beaufschlagenden hydraulischen und sonstigen Kräfte auf ein Minimum reduziert bzw. ganz beseitigt sind, so daß die den Ventilteller in Schließstellung haltende Feder minimal schwach und/oder kurz werden kann.

Diese Aufgabe wird gelöst durch einen gattungsgemäßen Verbundzähler mit den Merkmalen gemäß Kennzeichen des Anspruchs 1.

Dank der starken Einengung des Hauptstrom-Dichtsitzes wirkt auf das Absperrorgan nur ein geringer Öffnungsdruck, was die Verwendung der schwachen bzw. kurzen Feder ermöglicht. Der mit einer solchen starken Einengung des Strömungsquerschnitts normalerweise verbundene hohe Druckverlust wird durch den langen Einlauftrichter vermieden. Durch den sich stromabwärts konisch verengenden Ringkammermantel wird zudem gewährleistet, daß die auf das Absperrorgan wirkenden Strömungskräfte nach dem Öffnen des Hauptstrom-Durchgangs kontinuierlich zunehmen, so daß der Rand des Absperrorgans sozusagen schlagartig die Staustufe überwindet, während sie beim Schließen des Hauptstrom-Durchgangs und nach Überwinden der Staustufe ebenso kontinuierlich abnehmen, so daß das Absperrorgan schlagartig schließt.

Handelt es sich um eine Ausführungsform der Erfindung, bei der der Nebenstrom in die das Absperrorgan aufnehmende Ringkammer eingeleitet wird, so erfolgt die Einleitung über Steuerschlitze in einer gesonderten Schlitzzone, die sich zwischen der zylindrischen Zone und der konischen Zone der Ringkammer befindet. Dadurch wird sichergestellt, daß die vom Nebenstrom ausgelösten Strömungskräfte das Absperrorgan erst dann in Öffnungsrichtung beaufschlagen, wenn dieses einen definierten Anfangshub absolviert und der Wasser-Differenzdruck einen bestimmten Mindestwert überschritten hat.

Handelt es sich um eine Ausführungsform der Erfindung, bei der der Nebenstrom hinter dem Umschaltventil in das Ventilgehäuse geleitet wird, empfiehlt sich die Verwendung eines Steuerventils in der Nebenleitung bzw. im Nebenkanal, welches den Nebenstrom stark drosselt, sobald die Durchflußmenge ein bestimmtes Maß überschreitet. Dadurch wird auf das Absperrorgan ein Druckstoß ausgeübt, der den Rand des Absperrorgans durch die zylindrische Zone der Ringkammer bis in deren konische Zone schiebt, worauf die Strömungskräfte das Absperrorgan wie schon beschrieben schlagartig aufschieben.

Weitere Ausgestaltungen und Verbesserungen der Erfindung sind Gegenstand der restlichen Unteransprüche. Auf diese und die nachfolgende Figurenbeschreibung wird Bezug genommen.

Anhand der Zeichnung soll die Erfindung in Form von Ausführungsbeispielen näher erläutert werden. Es zeigen
- Fig. 1: eine schematische Draufsicht auf einen Verbundwasserzähler in Kurzbaulänge,
- Fig. 2: einen Längsschnitt durch ein Umschaltventil in Schließstellung, bei dem der Nebenstrom in den Schalteinsatz geführt ist,
- Fig. 3: den Schalteinsatz nach Fig. 2 in maximaler Offenstellung,
- Fig. 4: einen Längsschnitt durch ein anderes Umschaltventil in Schließstellung, bei dem der Nebenstrom unmittelbar in das Ventilgehäuse mündet,
- Fig. 5: den Schalteinsatz nach Fig. 4, jedoch mit einem O-Ring als Dichtung am Absperrorgan, und
- Fig. 6: einen Querschnitt durch den Schalteinsatzträger der Fig. 3 im Bereich der Schlitzzone.

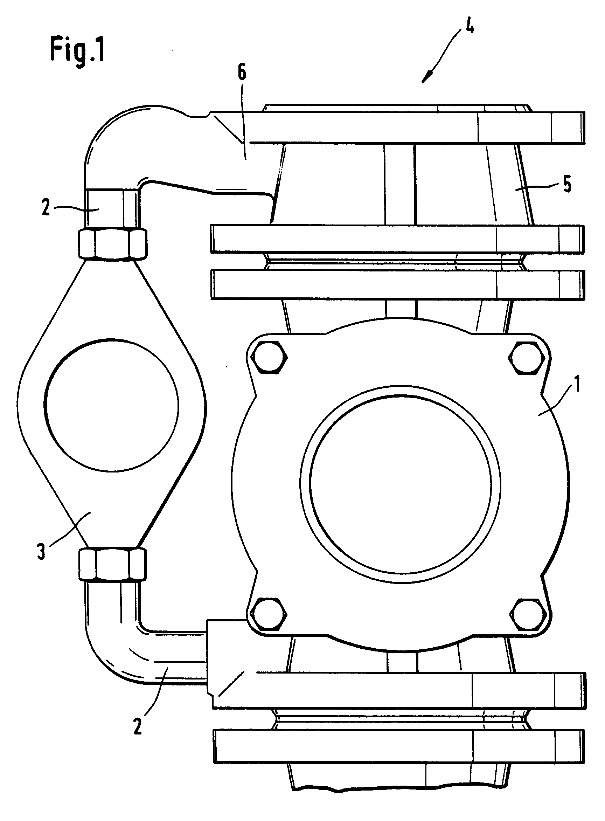

Fig. 1 zeigt schematisch einen Verbundwasserzähler, im wesentlichen bestehend aus einem Hauptzähler 1, einem Nebenzähler 3 und einer Nebenleitung 2, deren Ausgang 6 in das Gehäuse 5 eines Umschaltventils 4 mündet. Alle Teile sind miteinander verschraubt und gegenseitig abgedichtet. Auffällig ist die extrem kurze Baulänge des Umschaltventils 4.

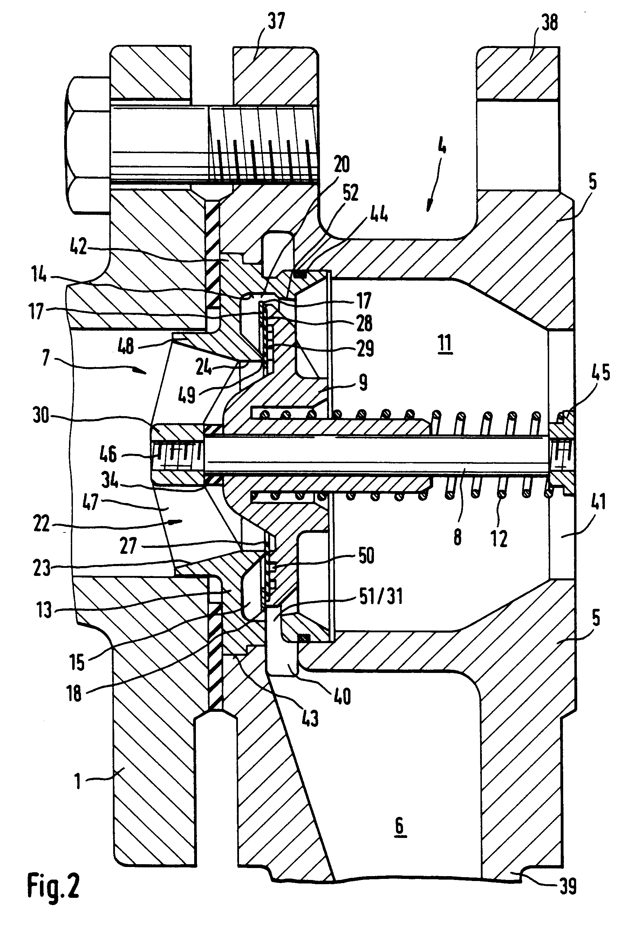

Fig. 2 zeigt in vergrößertem Maßstab einen Längsschnitt durch ein erstes Umschaltventil 4. Dieses besitzt ein Ventilgehäuse 5 mit Eingangsflansch 37, Ausgangsflansch 38 und Anschlußstutzen 39 für die Nebenleitung 2. Das vom Nebenzähler 3 kommende Wasser fließt über einen Nebenkanal 2 in einen zentralen Ringkanal 40 des Ventilgehäuses 5. In diesem sitzt ein kompakter Schalteinsatz 7, der mit seinem Paßring 42 in einem Gehäuse-Einpaß 43 geführt und mittels O-Ring 44 gegenüber dem Gehäuse-Hinterteil 11 abgedichtet ist.

Der Schalteinsatz 7 besteht im wesentlichen aus einem Schalteinsatzträger 13, an dessen Vorderteil 46 eine Nabe 30 angeformt ist, an der ein zentraler Gleitbolzen 8 angeschraubt oder angespritzt ist. Stützrippen 47 verbinden die zentrale Nabe 30 mit einem Außenring 48. Auf dem Gleitbolzen 8 sitzt längsbeweglich ein Absperrorgan 9 mit einer Lippendichtung 27, eine vorgespannte Druckfeder 12 und eine Spannmutter 45. Ferner ist eine Dichtung 34 vorgesehen, gegen die sich das Absperrorgan 9 anlegt.

Das Außenteil 28 der Lippendichtung 27 ist am Tellerrand 17 des Absperrorgans 9 eingeklemmt. Das Innenteil 29 der Lippendichtung 27 wird bei geschlossenem Ventil über eine labyrinthförmige Auflage 50 und die Druckfeder 12 fest gegen eine kreisförmige Dichtkante 49 des Schalteinsatzträgers 13 gepreßt.

Vor der Dichtkante 49 befindet sich ein Einlauftrichter 23, der möglichst lang und flach ist, um den Druckverlust, den das Wasser beim Durchgang durch den gegenüber dem Nennquerschnitt des Ventils stark eingeengten - typisch ist eine Flächenverringerung von 30 bis 40 % - Querschnitt der Hauptstrom-Durchflußzone 22 erleidet, zu reduzieren. Bei maximalem Wasserdurchfluß darf nach der Eichordnung der Druckverlust 0,5 bar nicht übersteigen.

Der Schalteinsatzträger 7 besitzt weiterhin eine Ringkammer 15 mit einer zylindrischen Zone 14, einer Schlitzzone 51 und einer sich stromabwärts daran anschließenden konischen Staustufe 52. Der tellerförmige Rand 17 des Absperrorgans 9 steht bei geschlossenem Ventil kräfte- und berührungsfrei in der zylindrischen Zone 14. Die zylindrische Zone 14 kann daher auch als neutrale Zone bezeichnet werden.

Das in den zentralen Ringkanal 40 einfließende Nebenzählerwasser fließt durch Steuerschlitze 31 in der Schlitzzone 51 und durch die konische Staustufe 52 zum Hinterteil 11 des Ventilgehäuses 5 und verläßt dieses über den Gehäuse-Ausgang 41, um zu einer nicht dargestellten Wasser-Entnahmestelle zu fließen. Die Steuerschlitze 31 sind erheblich schmaler als der Ringkanal 40.

Für die Steuerung des Absperrorgans 9 beim Öffnen und Schließen desselben sind die äußere Kante 18 des Tellerrandes 17, die Schlitzzone 51, die konische Staustufe 52 und die Lippendichtung 27 verantwortlich. Diese wirken beim Öffnen des Absperrorgans 9 wie folgt zusammen:

Bei geschlossenem Ventil strömt das zu messende Wasser über die Nebenleitung 2, wird im Nebenzähler 3 gemessen und strömt anschließend durch den Anschlußstutzen 39 in den Ringkanal 40 des Ventilgehäuses 5. Von dort gelangt es durch die Steuerschlitze 31 und die konische Staustufe 52 in das Gehäuse-Hinterteil 11. Dabei entsteht ein Druckabfall von etwa 0,2 bis 0,4 bar. Im Gehäuse-Rückraum 11 herrscht ein niedrigerer Druck als im Hauptzähler 1. Dieser Differenzdruck beaufschlagt das an der Dichtkante 49 abgedichtete Absperrorgan 9 in Öffnungsrichtung. Die Druckfeder 12 hält das Absperrorgan 9 jedoch zunächst geschlossen.

Steigt mit dem Durchfluß durch die Nebenleitung 2 auch die Druckdifferenz weiter an, so beginnt das Absperrorgan 9 sich gegen die Kraft der Druckfeder 12 zu bewegen. Dabei bleibt die elastische Lippendichtung 27 zunächst noch geschlossen. Der Tellerrand 17 des Absperrorgans 9 gleitet jedoch durch die neutrale Zone 14 bis etwa in die Mitte der Schlitzzone 51. Hier erfaßt der Nebenstrom den Tellerrand 17 und schiebt ihn in die konische Staustufe 52. Hier verringert sich der schmale Ringspalt 20 zwischen Tellerrand 17 und Ringkammermantel 19 kontinuierlich; deshalb wird der Tellerrand 17 in jedem Fall bis hinter das Ende der Staustufe 52 geschoben. Dabei reißt die Lippendichtung 27 von der Dichtkante 49 ab und die Hauptmenge des Wassers strömt durch den Hauptzähler 1 und die Hauptstrom-Durchflußzone 22. Dieser Öffnungsvorgang erfolgt sehr schnell, so daß Meßfehler nicht auftreten.

Infolge des hinter der konischen Staustufe 52 auftretenden Staudrucks wirkt diese wie eine hydraulische Raste. Das Absperrorgan 9 kann daher zunächst nicht mehr zurück.

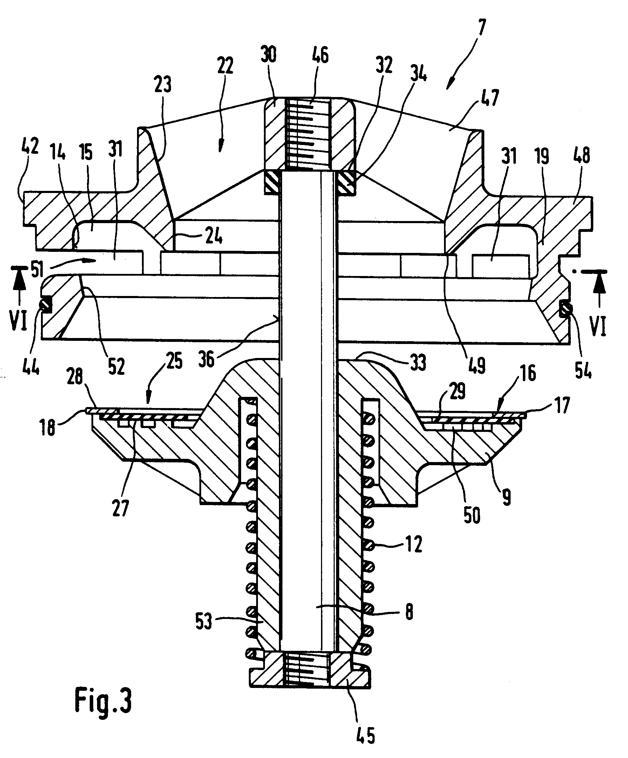

Steigt der Wasserdurchfluß weiter an, wird das Absperrorgan 9 vom durchlaufenden Wasser gegen den Widerstand der Druckfeder 12 auf dem Gleitbolzen 8 weiter stromabwärts geschoben, bis es seine Endstellung erreicht (Fig. 3).

Das Schließen des Umschaltventils erfolgt in umgekehrter Reihenfolge. Bei einer Abnahme des Hauptstrom-Durchflusses gleitet das Absperrorgan 9 durch die Schließkraft der Druckfeder 12 aus seiner Endstellung stromaufwärts, bis es an die Staustufe 52 gelangt. Hier bleibt das Absperrorgan 9 stehen, bis der Wasserdurchfluß so weit zurückgeht, daß die Kraft der Druckfeder 12 den Stauwiderstand der hydraulischen Raste überwinden kann. Das Absperrorgan 9 gleitet dann ohne Verzögerung in seine Schließstellung zurück, wobei die kontinuierliche Erweiterung des Ringspaltes 20 die Schließbewegung beschleunigt. Der Hauptstrom-Durchfluß 22 wird somit schlagartig geschlossen; das Wasser fließt nur noch durch den Nebenzähler 3.

Fig. 3 zeigt den Schalteinsatz 7 aus Fig. 2 in vergrößertem Maßstab und bei maximal geöffnetem Absperrorgan 9. Dieses liegt mit seiner Nabe 53 an der Federspannmutter 45 an.

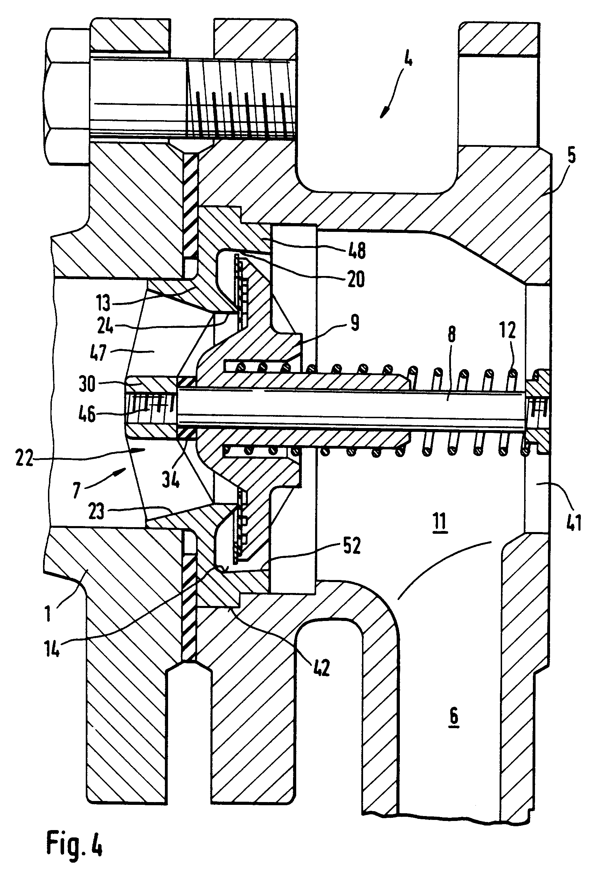

Fig. 4 zeigt einen Längsschnitt durch ein weiteres Umschaltventil 4. Hier mündet der Ausgang 6 der Nebenleitung 2 hinter dem Schaltventileinsatz 7 in das Ventilgehäuse 5. Es gibt daher weder einen zentralen Ringkanal 40 noch eine Schlitzzone 51. Der Außenring 48 mit dem Paßring 42 des Schalteinsatzträgers 13 wurden baulich verändert. Die zum Öffnen und Schließen des Absperrorgans 9 erforderliche Steuerung übernimmt hier ein übliches, in der Nebenleitung 2 angeordnetes Steuerventil, welches bei Überschreitung einer bestimmten Durchflussmenge die Nebenleitung 2 stark drosselt.

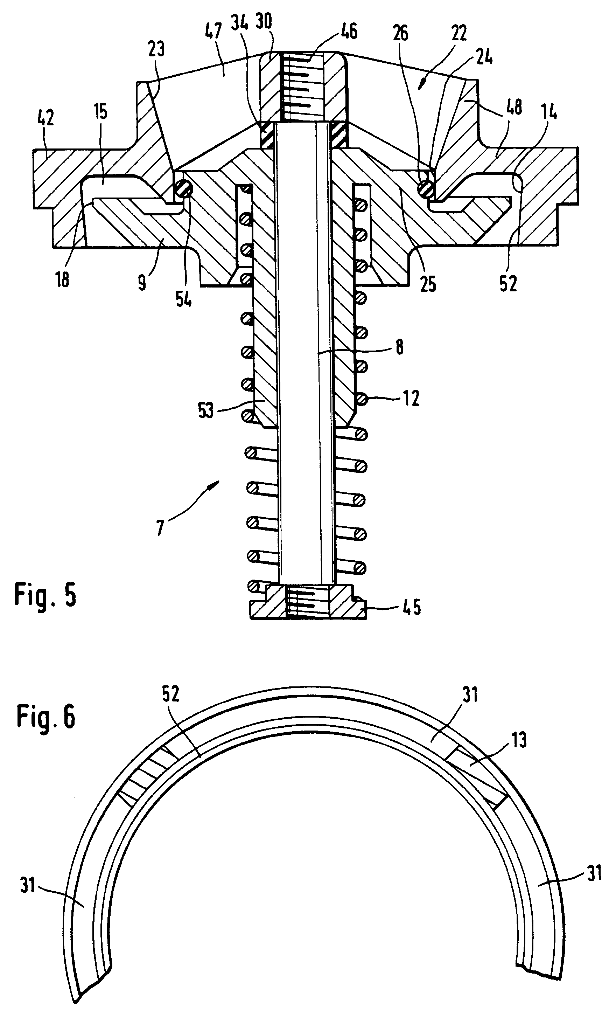

Fig. 5 zeigt einen abgewandelten Schalteinsatz 7, bei dem die Hauptstrom-Durchflusszone 22 mit einem O-Ring 26 abgedichtet ist. Dieser ist fest in eine Ringnut 54 am Absperrorgan 9 eingespannt. Damit das Absperrorgan 9 einen gewissen Anfangshub ausführen kann, ohne dass der Hauptstrom-Durchgang öffnet, befindet sich am Ende des langen Einlauftrichters 23 ein zylindrischer Dichtsitz-Durchgang 24. Dieser soll so kurz wie nur möglich bleiben, damit der Druckverlust in der stark eingeengten Hauptstrom-Durchflusszone nicht unzulässig ansteigt.

In Fig. 4 und 5 ist die neutrale Zone nicht zylindrisch ausgeführt wie auf S. 5, Z. 13, 14 gefordert. Vom Anspruch 1 umfasst werden ausschließlich Ausführungsformen, bei denen die neutrale Zone zylindrisch ausgeführt ist.

Fig. 6 schließlich zeigt ausschnittsweise einen Querschnitt entlang der Linie VI-VI durch das Umschaltventil der Fig. 3 im Bereich der Schlitzzone 51. Man erkennt den Schalteinsatzträger 13 im Schnitt, die Steuerschlitze 31 sowie die konische Staustufe 52.

Trotz aller Unterschiede, die die Ausführungsbeispiels nach den Fig. 2, 4 und 5 aufweisen, sind ihnen die für die optimale Funktion des Umschaltventils 4 verantwortlichen Merkmale gemeinsam. Es handelt sich dabei um die stark eingeengte Hauptstrom-Durchflusszone 22 zur Verringerung der Federkraft bzw. zur Verkürzung der Feder 12, den langen Einlauftrichter 23 zur Verringerung des Druckverlustes, die konsequente Vermeidung aller weiteren Druck- und Strömungskräfte, die das sich in der neutralen Zone 14 befindende Absperrorgan 9 in Öffnungsrichtung beaufschlagen könnten, und die konische Staustufe 52, die dafür sorgt, dass das Absperrorgan 9 sich entweder nur ganz in der Ringkammer 15 oder nur ganz außerhalb derselben befinden kann. Die Summe dieser Merkmale führt zu einem äußerst kurz bauenden Umschaltventil 4, welches nur einen einzigen Dichtsitz besitzt, sehr einfach, preiswert und betriebssicher ist, keinerlei Hilfsmittel oder Hilfskräfte zum Öffnen und Schließen benötigt und etwaige Meßfehler im Umschaltbereich auf ein absolutes Minimum reduziert.

## Patentansprüche

1. Verbundwasserzähler mit einem Hauptzähler (1) für die Messung der größeren Durchflüsse, einem dahinter angeordneten, selbsttätig wirksamen Umschaltventil (4), das keinen Magnetverschluss aufweist, einem in einer Nebenleitung (2) oder einem Nebenkanal sitzenden Nebenzähler (3) für die Messung der kleineren Durchflüsse und einem Ausgang (6) von Nebenleitung (2) bzw. Nebenkanal, der seitlich in das Gehäuse (5) des Umschaltventils (4) einmündet, wobei das Umschaltventil (4) einen kompletten Schalteinsatz (7) enthält, bestehend aus einem Träger (13), einem daran befestigten zentralen Gleitbolzen (8), einem darauf verschiebbar geführten, von einer Feder (12) in Schließrichtung belasteten Absperrorgan (9), einem mit einer elastischen Dichtung (26, 27) ausgerüsteten, im Durchmesser verengten Hauptstrom-Dichtsitz (49) zwischen Träger (13) und Absperrorgan (9) und einer das Absperrorgan (9) aufnehmenden Ringkammer (15), die stromabwärts offen ist und in eine konisch verengte Staustufe (52) ausläuft, wobei das Umschaltventil außer dem Hauptstromdichtsitz keinen weiteren nicht direkt am zentralen Gleitbolzen anliegenden Dichtsitz aufweist und weiter vorgesehen ist, dass die Hauptstrom-Durchflusszone (22) des Schalteinsatzes (7) aus einem sich stromabwärts verjüngenden Einlauftrichter (23) mit dem im Vergleich zur Ventil-Nennweite um 20 bis 40 % eingeengten Hauptstrom-Dichtsitz (49) am Ende besteht, dass die Dichtung (26, 27) am Absperrorgan (9) befestigt ist, dass die Ringkammer (15) eine zylindrische Zone (14) aufweist dass das Absperrorgan (9) einen Tellerrand (17) besitzt, dessen Frontpartie (16) sich in Ventilschließstellung kräfte- und berührungsfrei innerhalb der zylindrischen Zone (14) und damit stromaufwärts und außerhalb des Einlassbereichs des Nebenstroms befindet, so dass die vom Nebenstrom ausgelösten Strömungskräfte das Absperrorgan in Ventilschließstellung keinesfalls in Öffnungsrichtung beaufschlagen, dass der Ringkammermantel (19) sich erst im Anschluss an die zylindrische Zone (14) verengt, dass zwischen der äußeren Kante (18) des Tellerrandes (17) und dem Ringkammermantel (19) ein schmaler Ringspalt (20) verbleibt und der Tellerrand beim Öffnen bis hinter das Ende der Staustufe geschoben wird.

2. Verbundwasserzähler nach Anspruch 1, dadurch gekennzeichnet, daß Träger (13), Ringkammermantel (19) und Staustufe (52) einstöckig ausgeführt sind und insbesondere aus Kunststoff gespritzt sind, und daß der Gleitbolzen (8) in eine Nabe (30) des Trägers (13) eingeschraubt bzw. eingespritzt ist.

3. Verbundwasserzähler nach Anspruch 1 oder 2, dadurch gekennzeichnet, daß sowohl an der Rückseite (32) der Nabe (30) des Trägers (13) als auch an der Vorderseite (33) des Absperrorgans (9) am zentralen Gleitbolzen (8) anliegende Dichtflachen ausgebildet sind, die miteinander korrespondieren.

4. Verbundwasserzähler nach einem der Ansprüche 1 bis 3, dadurch gekennzeichnet, daß zwischen der Rückseite (32) der Nabe (30) des Trägers (13) und der Vorderseite (33) des Absperrorgans (9) auf dem Gleitbolzen (8) eine elastische Dichtung (34) sitzt.

5. Verbundwasserzähler nach einem der Ansprüche 1 bis 4, dadurch gekennzeichnet daß am Ende des Einlauftrichters (23) vor dem Hauptstrom-Dichtsitz (49) ein kurzer, zylindrischer Dichtsitz-Durchgang (24) vorgesehen ist.

6. Verbundwasserzähler nach Anspruch 5, dadurch gekennzeichnet, daß das Absperrorgan (9) an seiner Vorderseite einen O-Ring (26) trägt, der mit seinem Außendurchmesser den Dichtsitz-Durchgang (24) derart abdichtet, daß beim öffnen des Ventils die Dichtigkeit über einen vorbestimmten Hub erhalten bleibt.

7. Verbundwasserzähler nach einem der Ansprüche 1 bis 5, dadurch gekennzeichnet, daß das Absperrorgan (9) an seiner Vorderseite eine ringförmige Lippendichtung (27) trägt, deren Außenrand (28) dicht am Absperrorgan (9) befestigt ist, während ihr Innenrand (29) sich beim Öffnen des Ventils unter Erhalt der Dichtigkeit um einen vorbestimmten Hub axial verbiegt und daß unter der Lippendichtung (27) eine labyrinthartige Auflagefläche (50) vorgesehen ist.

8. Verbundwasserzähler nach einem der Ansprüche 1 bis 7, dadurch gekennzeichnet, daß der Schalteinsatzträger (13) zwischen der zylindrischen Zone (14) und der konischen Zone (52) eine Schlitzzone (51) mit Steuerschlitzen (31) aufweist, durch die der Nebenstrom in die Ringkammer (15) strömt, und daß die Frontpartie (16) des tellerförmigen Randes (17) des Absperrorgans (9) sich in Ventilschließstellung innerhalb der zylindrischen Zone (14) der Ringkammer (15) befindet, ohne vom Nebenstrom beaufschlagt zu werden.

9. Verbundwasserzähler nach Anspruch 8, dadurch gekennzeichnet, daß im Gehäuse (5) ein zu den Steuerschlitzen (31) offener Ringkanal (40) vorgesehen ist.

10. Verbundwasserzähler nach einem der Ansprüche 1 bis 7, dadurch gekennzeichnet, daß der Nebenkanal bzw. die Nebenleitung (2) direkt in das Gehäuse-Rückteil (11) mündet und ein Steuerventil (21) enthält.

11. Verbundwasserzähler nach einem der Ansprüche 1 bis 10, dadurch gekennzeichnet, daß der Querschnitt der Hauptstrom-Durchflußzone (22) am Dichtsitz-Durchgang (24) um ca. 30 % reduziert ist gegenüber dem Nennquerschnitt des Umschaltventils (4).

## Claims

1. A composite water meter with a main meter (1) for measuring the major throughflows, with an automatically acting change-over valve (4) arranged downstream thereof, which does not have a magnetic lock, with an auxiliary meter (3) for measuring the minor throughflows, which is disposed in an auxiliary duct (2) or an auxiliary passage, and with an outlet (6) from the auxiliary duct (2) or auxiliary passage, which discharges laterally into the housing (5) of the change-over valve (4), wherein the change-over valve (4) contains a complete switching insert (7) comprising a carrier (13), a central slide pin (8) secured thereto, a shut-off member (9) guided slidably thereon and biased by a spring (12) in the closing direction, a main flow sealing seat (49) between the carrier (13) and the shut-off member (9), which seat is provided with a resilient seal (26,27) and which is of constricted diameter, and an annular chamber (15) which accommodates the shut-off member (9), which is open downstream and which extends into a tapered barrier stage (52), wherein other than the main flow sealing seat the change-over valve does not have any other sealing seat not abutting against the central slide pin and it is further provided that the main stream throughflow zone (22) of the switching insert (7) comprises a downstream tapering inlet funnel (23) with the main flow sealing seat (49) at the end narrowed by 20 to 40 % in relation to the nominal valve width, in that the seal (26,27) is secured to the shut-off member (9), in that the annular chamber (15) has a cylindrical zone (14), in that the shut-off member (9) has a disc rim (17), the front surface (16) of which, in the closed position of the valve, is disposed without force and without contact inside the cylindrical zone (14) and therefore upstream and outside the inlet region of the auxiliary flow, so that, in the closed position of the valve, the flow forces released by the auxiliary flow do not act on the shut-off member in the opening direction, in that the annular chamber casing (19) narrows only adjoining the cylindrical zone (14), in that a narrow annular clearance (20) is left between the outer edge (18) of the disc rim (17) and the annular chamber casing (19), and during the opening operation the disc rim is displaced to behind the end of the barrier stage.

2. A composite water meter according to Claim 1, characterised in that the carrier (13), annular chamber casing (19) and barrier stage (52) are formed in one piece and, in particular, are injection-moulded from plastics material, and in that the slide pin (8) is screwed into or injection-moulded in a hub (30) of the carrier (13).

3. A composite water meter according to Claim 1 or 2, characterised in that mutually corresponding sealing faces, which abut against the central slide pin (8), are formed both on the rear side (32) of the hub (30) of the carrier (13) and on the front side (33) of the shut-off member (9).

4. A composite water meter according to any one of Claims 1 to 3, characterised in that between the rear side (32) of the hub (30) of the carrier (13) and the front side (33) of the shut-off member (9) a resilient seal (34) is mounted on the sliding pin (8).

5. A composite water meter according to any one of Claims 1 to 4, characterised in that a short cylindrical sealing seat passage (24) is provided at the end of the inlet funnel (23) upstream of the main flow sealing seat (49).

6. A composite water meter according to Claim 5, characterised in that on its front side the shut-off member (9) has an O-ring (26) which with its outer diameter seals the sealing seat passage (24) in such a way that, when the valve is opened, fluidtightness is maintained over a predetermined length of travel.

7. A composite water meter according to any one of Claims 1 to 5, characterised in that on its front side the shut-off member (9) has an annular lip seal (27), the outer rim (28) of which is secured fluidtightly to the shut-off member (9), whereas, when the valve is opened, its inner rim (29) bends axially while retaining fluidtightness over a predetermined length of travel, and in that a labyrinthine bearing surface (50) is provided under the lip seal (27).

8. A composite water meter according to Claims 1 to 7, characterised in that the switching insert carrier (13) has between the cylindrical zone (14) and the conical zone (52) a slotted zone (51) with control slots (31), through which the auxiliary stream flows into the annular chamber (15), and in that, in the closed position of the valve, the front part (16) of the disc rim (17) of the shut-off member (9) is situated inside the cylindrical zone (14) of the annular chamber (15), without being acted upon by the auxiliary stream.

9. A composite water meter according to Claim 8, characterised in that an annular passage (40) open towards the control slots (31) is provided in the housing (5).

10. A composite water meter according to Claims 1 to 7, characterised in that the auxiliary duct or the auxiliary passage (2) discharges directly into the rear part (11) of the housing and contains a control valve (21).

11. A composite water meter according to Claims 1 to 10, characterised in that the cross-section of the main stream throughflow zone (22) at the sealing seat passage (24) is reduced by approximately 30 % with respect to the nominal cross-section of the change-over valve (4).

## Revendications

1. Compteur d'eau combiné comprenant un compteur principal (1) pour la mesure des débits importants, une vanne de commutation (4) disposée en aval, fonctionnant automatiquement et ne comportant pas de verrouillage magnétique, un compteur auxiliaire (3) pour la mesure des débits plus faibles, se trouvant dans une conduite auxiliaire (2) ou dans un canal auxiliaire, et une sortie (6) de la conduite auxiliaire (2) ou du canal auxiliaire, qui pénètre latéralement dans le carter (5) de la vanne de commutation (4), la vanne de commutation (4) comprenant une garniture complète de manoeuvre (7) se composant d'un support (13), d'un axe coulissant central (8) qui y est fixé, d'un élément de barrage (9) qui y est guidé de manière mobile et qui est actionné par un ressort (12) en direction de fermeture, d'un siège d'étanchéité pour le flux principal (49) qui est muni d'un joint souple (26, 27), dont le diamètre est rétréci et qui est disposé entre le support (13) et l'élément de barrage (9) et d'une chambre annulaire (15) recevant l'élément de barrage (9), qui est ouverte vers l'aval et qui se termine en un étage de retenue se rétrécissant en forme de cône (52), la vanne de commutation ne comportant, en dehors du siège d'étanchéité pour le flux principal, pas d'autre siège d'étanchéité non placé directement sur l'axe coulissant central et dans lequel il est prévu par ailleurs que la zone de passage du flux principal (22) de la garniture de manoeuvre (7) se compose d'un cône d'entrée (23) se rétrécissant vers l'aval avec à l'extrémité un siège d'étanchéité pour le flux principal (49) rétréci de 20 à 40% par rapport au diamètre nominal de la vanne, que le joint (26, 27) est fixé sur l'élément de barrage (9), que la chambre annulaire (15) comprend une zone cylindrique (14), que l'élément de barrage (9) possède un rebord plat (17) dont la partie frontale (16) se trouve, en position de fermeture, à l'intérieur de la zone cylindrique (14), sans être soumis à des efforts et à des contacts, et de ce fait en amont du flux et en dehors de la zone d'entrée du flux auxiliaire, les efforts hydrauliques produits par le flux auxiliaire n'agissant, en position de fermeture de la vanne, en aucun cas sur l'élément de barrage en direction d'ouverture, que l'enveloppe de la chambre annulaire (19) ne se rétrécit qu'au contact de la zone cylindrique (14), qu'il reste une étroite fente annulaire (20) entre le bord extérieur (18) du rebord plat (17) et l'enveloppe de la chambre annulaire (19) et que le rebord plat est poussé jusque derrière l'extrémité de l'étage de retenue lors de l'ouverture.

2. Compteur d'eau combiné selon la revendication 1 caractérisé en ce que le support (13), l'enveloppe de la chambre annulaire (19) et l'étage de retenue (52) sont réalisés d'une seule pièce et sont en particulier fabriqués en plastique moulé par injection, et en ce que l'axe coulissant (8) est vissé ou moulé dans un moyeu (30) du support (13).

3. Compteur d'eau combiné selon la revendication 1 ou 2, caractérisé en ce que des surfaces d'étanchéité placées sur l'axe coulissant central (8) et correspondant entre elles se trouvent aussi bien sur le coté arrière (32) du moyeu (30) du support (13) que sur le coté avant (33) de l'élément de barrage (9).

4. Compteur d'eau combiné selon l'une des revendications 1 à 3, caractérisé en ce qu'un joint souple (34) est placé entre le coté arrière (32) du moyeu (30) du support (13) et le coté avant (33) de l'élément de barrage (9) sur l'axe coulissant (8).

5. Compteur d'eau combiné selon l'une des revendications 1 à 4, caractérisé en ce qu'un court passage cylindrique du siège d'étanchéité (24) est prévu à l'extrémité du cône d'entrée (23) devant le siége d'étanchéité pour le flux principal (49).

6. Compteur d'eau combiné selon la revendication 5, caractérisé en ce que l'élément de barrage (9) est muni sur son coté avant d'un joint torique (26) dont le diamètre extérieur assure l'étanchéité du passage du siège d'étanchéité (24) de façon telle que l'étanchéité est maintenue sur une longueur de course prédéterminée lors de l'ouverture de la vanne.

7. Compteur d'eau combiné selon l'une des revendications 1 à 5, caractérisé en ce que l'élément de barrage (9) porte sur son coté avant un joint à lèvre de forme circulaire (27) dont le bord extérieur (28) est fixé de manière serrée sur l'élément de barrage (9) tandis que, lors de l'ouverture de la vanne, son bord intérieur (29) se déforme en direction axiale sur une longueur de course prédéterminée tout en maintenant l'étanchéité et en ce qu'une surface d'appui en forme de labyrinthe (50) est prévue sous le joint à lèvre (27).

8. Compteur d'eau combiné selon l'une des revendications 1 à 7, caractérisé en ce que le support de garniture de manoeuvre (13) est muni entre la zone cylindrique (14) et la zone conique (52) d'une zone de fente (51) comprenant des fentes de commande (31) par lesquelles le flux auxiliaire s'écoule dans la chambre annulaire (15) et en ce que la partie frontale (16) du rebord plat (17) de l'élément de barrage (9) se trouve à l'intérieur de la zone cylindrique (14) de la chambre annulaire (15) en position de fermeture de la vanne, sans pour cela subir l'action du flux auxiliaire.

9. Compteur d'eau combiné selon la revendication 8, caractérisé en ce qu'un canal annulaire (40) ouvert en direction des fentes de commande (31) est prévu dans le carter (5).

10. Compteur d'eau combiné selon l'une des revendications 1 à 7, caractérisé en ce que le canal auxiliaire ou la conduite auxiliaire (2) aboutit directement dans la partie arrière du carter (11) et comprend une vanne de commande (21).

11. Compteur d'eau combiné selon l'une des revendications 1 à 10, caractérisé en ce qu'au passage du siège d'étanchéité (24) la section de la zone du flux principal (22) est réduite d'environ 30% par rapport à la section nominale de la vanne de commutation (4).
